# EUROPÄISCHE PATENTSCHRIFT

(11) **EP 1 889 532 B1**
(45) Veröffentlichungstag und Bekanntmachung des Hinweises auf die Patenterteilung: **30.08.2017**
(21) Anmeldenummer: 07006955.4
(22) Anmeldetag: 03.04.2007
(51) Int. Cl.: A01C 7/10, A01C 7/08

(54) **Sämaschine sowie Verfahren zur Regelung des Austrags einer Sämaschine**
Sowing machine and method for regulating the discharge of a sowing machine
Machine à semer et procédé destiné à la régulation du débit d'une machine à semer

(30) Priorität: 18.08.2006 DE 102006038865
(43) Veröffentlichungstag der Anmeldung: 20.02.2008
(73) Patentinhaber: PÖTTINGER Landtechnik GmbH, 4710 Grieskirchen (AT)
(72) Erfinder: Baldinger, Markus, 4084 St. Agatha (AT); Preimeß, Hans-Jörg, 9811 Lendorf 15 (AT); Pöttinger, Klaus, 4710 Grieskirchen (AT)
(74) Vertreter: Thoma, Michael

(56) Entgegenhaltungen:
- EP-A2- 1 882 405
- DE-A1- 10 350 542
- DE-A1-102004 008 052
- DE-T2- 69 621 371
- DE-U1- 20 203 032
- US-A- 6 093 926
- US-A1- 2004 231 575
- W. KINSNER ET AL: "A fuzzy seeding depth monitoring and control system", COMMUNICATIONS, COMPUTERS AND POWER IN THE MODERN ENVIRONMENT. SASKATOON, MAY 17 - 18, 1993., 1993, Seiten 276-281, XP55265437, US DOI: 10.1109/WESCAN.1993.270587 ISBN: 978-0-7803-1319-4

## Beschreibung

Die vorliegende Erfindung betrifft eine Sämaschine mit einem Saatgutspeicher, einer Ausbringvorrichtung zum Ausbringen von Saatgut aus dem Saatgutspeicher sowie einer Regelvorrichtung zur Regelung des von der Ausbringvorrichtung bewirkten Saatgutaustrags in Abhängigkeit zumindest einer vorgebbaren Eingabegröße. Die Erfindung betrifft weiterhin auch ein Verfahren zur Regelung des Saatgutaustrags einer Sämaschine.

Saatgut meint im Kontext der vorliegenden Anmeldung vorzugsweise Pflanzensamen in Form von Körnern, kann jedoch auch Düngemittel, Herbizide und/oder Fungizide oder andere auf ein Feld auszubringende, vorzugsweise körnige Stoffe umfassen. Um den Saatgutaustrag möglichst präzise steuern zu können, werden Einzelkornsämaschinen eingesetzt, die über eine Vielzahl von Ausbringelementen, insbesondere Säscharen oder Särohre, das Saatgut in definierter Weise ausbringen. Hierbei wird nicht nur die absolute Körnerzahl, sondern auch der zeitliche Ablauf der Körnerablage präzise gesteuert, um in Abhängigkeit der Bodenbeschaffenheit und des Saatguts, aber auch anderer Aufwuchsparameter, wie beispielsweise geographische Lage oder topographische Beschaffenheit des Feldes, eine gewünschte Körnerdichte und damit Pflanzdichte und Aufwuchs zu erreichen. Um solche komplexen Säaufgaben erledigen zu können, besitzen moderne Sämaschinen diverse Bauelemente in ihrem Ausbringsystem, deren Betriebsparameter variabel eingestellt werden können. Dies erlaubt zwar einerseits eine feine Justierung des Saatgutaustrags, andererseits sind die Einstellungen schwierig aufeinander abzustimmen und viele Fehlerquellen gegeben.

Um einen präzisen Saatgutaustrag in der gewünschten Weise zu erreichen, wurden bereits vielerlei Verfahren zur Steuerung einer solchen Sämaschine vorgeschlagen. Die DE 100 37 713 A1 beschreibt eine pneumatische Drillmaschine mit einer Regelvorrichtung für den Saatgutaustrag. Um eine exakte Aussaatmenge pro Fläche nicht auf Gewichtsbasis, sondern auf Basis der ausgesäten Körner pro Quadratmeter zu erreichen, wird eine Teilmenge der durch einen Dosierer aus dem Saatgutspeicher abgezogenen Saatgutmenge einlagig über ein Leitblech geführt, wo sie von einer Sensoreinheit gezählt werden. Ein Regler rechnet die gezählte Teilmenge hoch und regelt das Ausbringsystem der Sämaschine. Die DE 101 34 991 A1 zählt eine Körnerzahl, die aus dem Steigrohr vor dem Verteilerkopf abgezweigt wird, während der Kehrfahrt auf dem Vorgewende und verwendet diese als Regelgröße für die Anpassung der Aussaatmenge. Weiterhin schlägt die DE 197 04 374 A1 eine geregelte Sämaschine vor, deren Regler eine Vielzahl von Betriebsparametern berücksichtigt und in diverse Stellsignale für die Bausteine des Ausbringsystems der Sämaschine umsetzt.

Ferner beschreibt das Dokument W. Kinsner et al: "A fuzzy seeding depth monitoring and control system", in Communications, Computers and Power in the Modern Environment, 1993, Seiten 276-281, XP55265437 eine Sämaschine, bei der die Sätiefe mittels eines Fuzzy Logic-Reglers geregelt wird. Der Fuzzy Logic-Regler verändert dabei den Skalierfaktor, mit dem manuell eingebbare Höhenstellbefehle in Stellsignale für die Höhenstellvorrichtung umgewandelt werden, anhand des Musters und der Frequenz der manuellen Stellbefehle.

Trotz dieser diversen Lösungsansätze ist es bislang nicht gelungen, den Saatgutaustrag unter wechselnden Bedingungen konstant präzise zu regeln. Der vorliegenden Erfindung liegt hiervon ausgehend die Aufgabe zugrunde, eine verbesserte Sämaschine der genannten Art sowie ein verbessertes Verfahren zur Regelung des Saatgutaustrags zu schaffen, die Nachteile des Standes der Technik vermeiden und letzteren in vorteilhafter Weise weiterbilden. Insbesondere soll ein präziser Saatgutaustrag auch unter schwierigen Bedingungen erreicht werden.

Erfingdungsgemäß wird diese Aufgabe durch eine Sämaschine gemäß Anspruch 1 sowie ein Verfahren gemäß Anspruch 22 gelöst. Bevorzugte Ausgestaltungen der Erfindung sind Gegenstand der abhängigen Ansprüche.

Es wird also vorgeschlagen, die Regelung vorzugsweise selbstlernend auszubilden, so dass sie sich an wechselnde Bedingungen, wie Umwelteinflüsse, Maschinenabnutzung oder wechselndes Saatgut, selbst anpasst. Erfindungsgemäß umfasst die Regelvorrichtung einen adaptiven Regler vorzugsweise mit einem Fuzzy Logic-Baustein zur Bestimmung zumindest einer Stellgröße für die Ausbringvorrichtung der Sämaschine mit Hilfe von Fuzzy Logic. Hierdurch kann eine verbesserte Anpassung des Regelungsverhaltens auch an stark schwankende Bedingungen und unerwartete Betriebsparameter erreicht werden. Insbesondere können auch komplex aufgebaute Ausbringvorrichtungen mit einer Vielzahl von justierbaren Bausteinen passend angesteuert werden, um den Saatgutaustrag in der gewünschten Weise präzise zu erreichen.

In Weiterbildung der Erfindung umfasst die Regelvorrichtung eine Eingabevorrichtung, mittels derer dem adaptiven Regler als Eingabegröße die Saatgutart, die Pflanzdichte und/oder die Keimrate, also die erwartete Keimfähigkeit, d.h. wie viel Prozent der gesäten Körner erwartungsgemäß aufgehen, zuführbar sind. Der adaptive Regler bestimmt hieraus die entsprechend vorzusehende Austragsmenge vorzugsweise sowohl hinsichtlich absoluter Gesamtmenge als auch geschwindigkeitsabhängiger Ausbringrate, d.h. Körnerzahl pro Zeit.

In Abhängigkeit der eingegebenen Eingabegrößen, insbesondere Saatgutart und Pflanzdichte, bestimmt der adaptive Regler sodann die notwendigen Stellgrößen für die Bausteine der Ausbringvorrichtung, um die gewünschte Ausbringmenge zu erzielen.

Hierbei verknüpft der Fuzzy Logic-Baustein in vorteilhafter Weise die Ist-Werte mehrerer Betriebsparameter mit mehreren Stellgrößen für die Ausbringvorrichtung gleichzeitig. Die diversen Stellgrößen für die Ausbringvorrichtung werden komplex in Abhängigkeit der Ist-Werte mehrerer Betriebsparameter verändert, um die gewünschte Ausbringmenge zu erzielen.

Die Ist-Werte der folgenden Betriebsparameter können hierbei berücksichtigt werden: Die Leistung und/oder die Drehzahl eines Gebläses der Ausbringvorrichtung, die Drehzahl und/oder Geschwindigkeit eines dem Saatgutspeicher nachgeschalteten Dosierers, der Saatgutspeicherfüllstand, die Geschwindigkeit und/oder Drehzahl einer Vereinzelungs- bzw. Vergleichmäßigungsvorrichtung, die Fahrgeschwindigkeit der Sämaschine und/oder der Ist-Wert der ausgebrachten Körnerzahl und/oder des zeitlichen Abstands der ausgebrachten Körner.

Die Stellgrößen für die zu justierenden Bausteine der Sämaschine können folgende Größen umfassen: Die Soll-Werte der folgenden Betriebsparameter können hierbei berücksichtigt werden: Die Leistung und/oder die Drehzahl eines Gebläses der Ausbringvorrichtung, die Drehzahl und/oder Geschwindigkeit eines dem Saatgutspeicher nachgeschalteten Dosierers, der Saatgutspeicherfüllstand, die Geschwindigkeit und/oder Drehzahl einer Vereinzelungs- bzw. Vergleichmäßigungsvorrichtung, die Fahrgeschwindigkeit der Sämaschine und/oder der Soll-Wert der ausgebrachten Körnerzahl und/oder des zeitlichen Abstands der ausgebrachten Körner.

Dabei kann die Ausbringvorrichtung der Sämaschine grundsätzlich verschieden ausgebildet sein. Nach der Erfindung umfasst die Ausbringvorrichtung eine mit dem Saatgutspeicher verbindbare zentrale Dosiervorrichtung, einen der Dosiervorrichtung nachgeschalteten Verteiler, der mit einer Vielzahl von Ausbringelementen, insbesondere Säscharen oder -rohren, verbunden ist und das von dem Saatgutspeicher erhaltende Saatgut auf die genannten Ausbringelemente verteilt, sowie eine Vereinzelungs- und/oder Vergleichmäßigungsvorrichtung zur Vereinzelung und/oder Vergleichmäßigung der Saatgutkörner bzw. des Saatgutkörnerstroms.

Die besagte Vereinzelungs- bzw. Vergleichmäßigungseinrichtung kann grundsätzlich an verschiedener Stelle vorgesehen sein. Bevorzugt ist jedoch eine Anordnung der Vereinzelungs- bzw. Vergleichmäßigungseinrichtung unmittelbar an oder unmittelbar vor den Ausbringelementen. Dies erlaubt eine präzisere Vereinzelung und Vergleichmäßigung, da einerseits durch die Anordnung nach dem Verteiler kleinere Saatgutkörnerströme zu vereinzeln bzw. zu vergleichmäßigen sind und andererseits weniger Störeinflüsse bis zum letztendlichen Saatgutaustrag auftreten können.

Um die tatsächliche Ausbringmenge präzise erfassen zu können, besitzt die Sämaschine vorteilhafterweise eine Erfassungseinrichtung, die die Ausbringmenge stromab der besagten Vereinzelungs- bzw. Vergleichmäßigungseinrichtung erfasst. Insbesondere kann eine Bilderfassungseinrichtung vorgesehen sein, die den von der Vereinzelungs- bzw. Vergleichmäßigungseinrichtung ablaufenden Saatgutkörnerstrom beobachtet.

Der adaptive Regler der Regelvorrichtung bestimmt die Stellgrößen für die vorgenannten Bausteine der Ausbringvorrichtung in Abhängigkeit der Signale der Erfassungseinrichtung. Insbesondere kann der Regler die Drehzahl eines Dosierrades der Dosiervorrichtung regeln, eine Justierung des Verteilerkopfes des der Dosiervorrichtung nachgeschalteten Verteilers vornehmen, die Drehzahl eines Dosierrotors der Vereinzelungs- bzw. Vergleichmäßigungseinrichtung regeln und die Leistung bzw. Drehzahl eines Gebläses regeln, mit Hilfe dessen das aus dem Saatgutspeicher abgezogene Saatgut zum Verteiler transportiert wird. Gegebenenfalls zusätzlich kann der Regler in die Geschwindigkeitssteuerung der Sämaschine bzw. des diese ziehenden Schleppers eingreifen und die Fahrgeschwindigkeit der Sämaschine regeln.

Gemäß einem weiteren vorteilhaften Aspekt ist eine automatische Kalibrierung des Reglers vorgesehen, wobei die entsprechende Kalibriereinrichtung vorteilhafterweise eine automatische Kalibrierung nur in einer Startphase eines Sävorgangs bei geringer Körnerzahl und bei geringer Fahrgeschwindigkeit vorsieht. Hierdurch kann eine besonders präzise Kalibrierung erreicht werden, beispielsweise kann die Durchführung einer automatischen Kalibrierung davon abhängig gemacht werden, dass die erfasste Körnerzahl und/oder die erfasste Fahrgeschwindigkeit unter einem entsprechenden Schwellenwert ist.

Optional kann allerdings auch ein Kalibriervorgang während des Sävorgangs vorgesehen werden.

Während der Kalibrierung wird eine Online-Messung der Ausbringmenge vorzugsweise sowohl hinsichtlich absoluter Körnerzahl als auch geschwindigkeitsabhängiger Körnerrate pro Zeit durchgeführt, so dass der Regler anhand eines Vergleichs der gemessenen Ist-Werte der Ausbringmenge mit einem entsprechenden Soll-Wert hierzu kalibriert werden kann.

Um eine präzisere Körnerzählung sowie eine qualitative Erfassung der Vergleichmäßigung zu erreichen, wird mit Hilfe der Sensorerfassungseinrichtung, erfindungsgemäß einer Bilderfassungseinrichtung, sowohl der Saatguteinlauf als auch der Saatgutaustritt an der Vereinzelungsvorrichtung überwacht, um dort Auffälligkeiten und insbesondere Zusammenhänge zwischen Unregelmäßigkeiten im Saatguteinlauf und im Saatgutaustritt zu erfassen. Erfindungsgemäß besitzt die Bilderfassungseinrichtung eine erste Kamera, die den Einlauf der Vereinzelungsvorrichtung beobachtet, und eine zweite Kamera, die den Austritt der Vereinzelungsvorrichtung beobachtet. Insbesondere kann mit der ersten Kamera die zeitliche Abfolge der in die Vereinzelungsvorrichtung einlaufenden Saatgutkörner und mit der zweiten Kamera der zeitliche Ablauf der aus der Vereinzelungseinrichtung austretenden Saatgutkörner erfasst werden, so dass kausale Zusammenhänge zwischen Einlauf- und Auswurfhäufungen erkannt werden können.

In Weiterbildung der Erfindung kann in Abhängigkeit der von den beiden Kameras gelieferten Bilder des Saatguteinlaufs und des Saatgutauslaufs an der Vereinzelungsvorrichtung in die Steuerung der Sämaschine eingegriffen werden, insbesondere können Betriebsparameter der Sämaschine in Abhängigkeit von Einlaufhäufungen und/oder Auswurfhäufungen von Saatgut an der Vereinzelungsvorrichtung verändert werden. Die beiden Kameras der Bilderfassungseinrichtung können in Weiterbildung der Erfindung mit der vorgenannten Regelvorrichtung oder einer Steuereinrichtung zur Steuerung zumindest eines Maschinenparameters in Abhängigkeit der von den beiden Kameras erfassten Bilder verbunden sein. Als bildabhängig steuerbare Maschinenparameter kommen grundsätzlich verschiedene in Betracht, so insbesondere eine Gebläseleistung, eine Dosiergeschwindigkeit, die Geschwindigkeit der Vereinzelungsvorrichtung, eine Verteilkopfjustierung, eine Schlepperdrehzahl und/oder eine Ablagetiefe. Die Steuereinrichtung kann in Abhängigkeit der von den beiden Kameras gelieferten Bilder entsprechende Stellsignale zur Ansteuerung von Stellgliedern erzeugen, mit Hilfe derer die besagten Betriebsparameter verändert werden können.

Die Steuereinrichtung kann hierbei eine Bildvergleichseinrichtung umfassen, mit Hilfe derer die Bilder der ersten Kamera mit den Bildern der zweiten Kamera verglichen werden. In Abhängigkeit dieses Bildvergleichs kann eine Bildauswerteeinrichtung kausale Zusammenhänge zwischen Einlaufhäufungen und Auswurfhäufungen bestimmen.

Insbesondere kann die Bildauswerteeinrichtung statistisch arbeitend ausgebildet sein und den zeitlichen Verlauf der Körnerzahl im Einlauf der Vereinzelungsvorrichtung und den zeitlichen Verlauf der Körnerzahl im Austritt der Vereinzelungsvorrichtung bestimmen und miteinander vergleichen. Dabei ist es vorteilhaft, wenn die Bildauswerteeinrichtung anhand der Bilder der ersten Kamera bestimmt, wie und ob die Körner am Einlauf der Vereinzelungsvorrichtung hintereinander ankommen, wodurch die Ursache für die jeweilige Vereinzelungsqualität bestimmt wird. Andererseits kann die Bildauswerteeinrichtung anhand der Bilder der zweiten Kamera am Auslauf der Vereinzelungsvorrichtung die Körner zählen und/oder deren zeitliche Abfolge bestimmen.

Um eine präzise Bilderfassung am Einlauf und am Auslauf der Vereinzelungsvorrichtung zu erreichen, können die Kameras der Bilderfassungseinrichtung verschieden ausgebildet sein, wobei grundsätzlich beide Kameras dieselbe oder eine ähnliche Ausbildung haben können. In Weiterbildung der Erfindung jedoch sind die erste Kamera und die zweite Kamera unterschiedlich ausgebildet.

Dabei kann nach einer vorteilhaften Ausführung der Erfindung die erste Kamera im Auflichtverfahren arbeiten. Mittels einer Kollimationsoptik werden die Körner im Einlaufbereich beleuchtet, wobei die erste Kamera die beleuchtete Seite der Körner erfasst. Insbesondere kann die erste Kamera dabei die am Umfang eines Rotors der Vereinzelungsvorrichtung transportierten Körner beobachten, die von dem Rotor mitgenommen und vereinzelt werden. Insbesondere kann die Kamera hierbei den Umfangsabschnitt des Rotors beobachten, der in Drehrichtung des Rotors betrachtet stromab eines Aufgabekanals, jedoch stromauf eines Austrittskanals liegt.

Die zweite Kamera kann in Weiterbildung der Erfindung im Durchlichtverfahren arbeiten. Eine Kollimationsoptik mit einer Lichtquelle bestrahlt die am Austritt der Vereinzelungsvorrichtung austretenden Saatgutkörner von der einen Seite her, wobei die zweite Kamera die Saatgutkörner von der anderen Seite her beobachtet, so dass faktisch die dunkle Seite bzw. der Schatten der einzelnen Saatgutkörner beobachtet wird.

In bevorzugter Ausgestaltung der Erfindung sind die beiden Kameras Zeilenkameras.

Die beiden Kameras können grundsätzlich mit verschiedenen Belichtungszeiten arbeiten. In Weiterbildung der Erfindung liegen die Belichtungszeiten der beiden Kameras im Bereich von 2 Millisekunden bis 50 Millisekunden. Vorteilhafterweise können die Belichtungszeiten der Kameras variabel gesteuert werden, insbesondere in Abhängigkeit eines Betriebsparameters der Vereinzelungsvorrichtung. So kann die Belichtungszeit in Abhängigkeit der Drehzahl der Vereinzelungsvorrichtung verändert werden.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische perspektivische Darstellung einer Sämaschine nach einer bevorzugten Ausführung der Erfindung,
- Fig. 2:: eine schematische Darstellung des Wegs des Saatgutaustrags und der hierbei wirksamen Maschinenkomponenten der Sämaschine aus Fig. 1, und
- Fig. 3:: eine schematische Darstellung der Bilderfassungsvorrichtung zur Überwachung der Vereinzelungsqualität der Sämaschine aus den vorhergehenden Figuren.

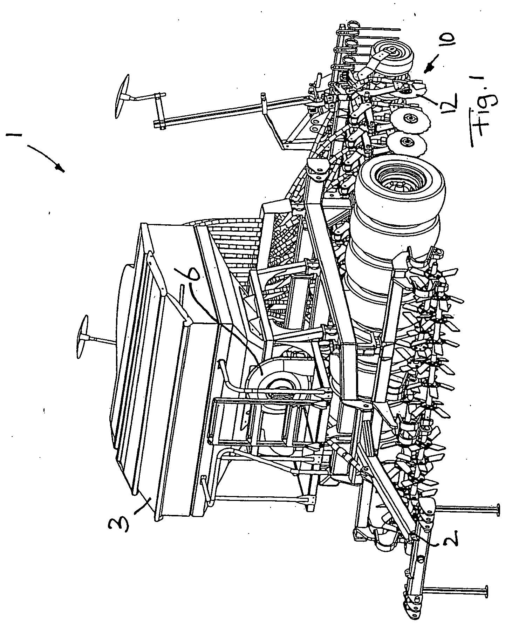

Die in Figur 1 gezeichnete Sämaschine 1 ist als Anbaugerät ausgeführt und kann über eine Deichsel 2 an einen nicht gezeichneten Schlepper angebaut werden.

Die Sämaschine 1 umfasst einen Saatgutspeicher 3, aus dem durch eine zentrale Dosiervorrichtung 4, beispielsweise umfassend einen Dosierrotor, eine gewünschte Saatgutmenge in Form von Samenkörnern, Düngemittelkörnern und dergleichen in einen Förderkanal 5 gegeben werden kann. Mittels eines mit dem Förderkanal 5 verbindbaren Gebläses 6 kann das von der Dosiervorrichtung 4 bereitgestellte Saatgut über den Förderkanal 5 und ein damit verbundenes Steigrohr 7 in den Verteilerkopf 8 eines Saatgutverteilers 9 gefördert werden. Der genannte Verteilerkopf 8 verteilt das ankommende Saatgut auf eine Mehrzahl von Ausbringelementen 10, mit denen der Verteilerkopf 8 jeweils über Säleitungen 11 verbunden ist. In der gezeichneten Ausführung umfassen die Ausbringelemente 10 Säschare 12, vgl. Figur 1.

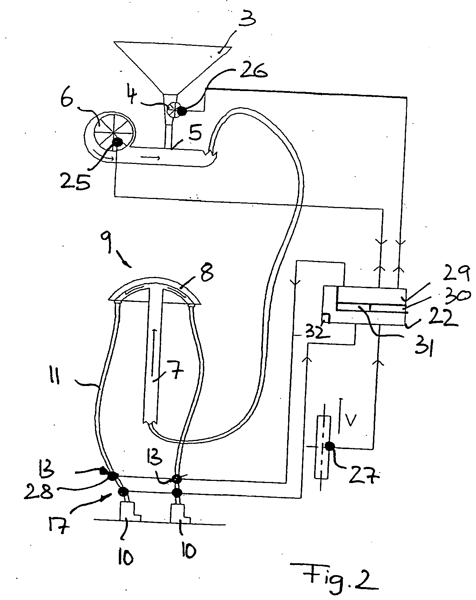

Zwischen dem besagten Verteilerkopf 8 und den Säscharen 12 ist eine in Figur 2 schematisch dargestellte Vereinzelungsvorrichtung 13 vorgesehen, die vorteilhafterweise kurz vor den Säscharen 12 angeordnet und/oder den Ausbringelementen 10 zugeordnet sein kann.

Die Vereinzelungsvorrichtung 13 kann grundsätzlich verschieden ausgebildet sein. In der gezeichneten Ausführung umfasst sie einen Vereinzelungsrotor 14, auf dessen Umfang die Saatgutkörner aus einer Zuführung 15 einlaufen und von dem sie über einen Auslauf 16 einzeln abgezogen werden.

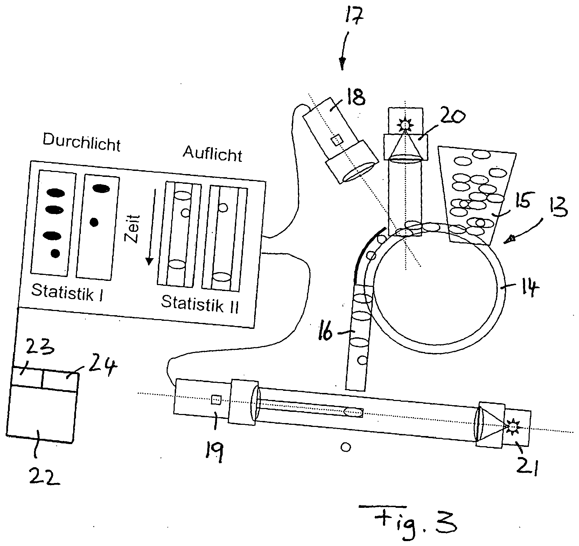

Wie Figur 3 zeigt, ist der Vereinzelungsvorrichtung 13 eine Bilderfassungsvorrichtung 17 zugeordnet, die eine erste Kamera 18 sowie eine zweite Kamera 19 aufweist. Die erste Kamera 18 beobachtet dabei den Einlaufbereich der Vereinzelungsvorrichtung 13. Wie Figur 3 zeigt, ist sie auf den Umfangsabschnitt des Vereinzelungsrotors 14 unmittelbar hinter der Zuführung 15 gerichtet. Eine Kollimationsoptik 20 mit einem Lichtemitter beleuchtet dabei den genannten Umfangsabschnitt des Vereinzelungsrotors 14 bzw. die darauf auflaufenden Saatgutkörner. Die erste Kamera 18 erfasst diese Saatgutkörner im Auflichtverfahren, wobei insbesondere der zeitliche Einlauf der Körner erfasst wird und/oder erfasst wird, wie und ob die Körner der Reihe nach ankommen.

Die zweite Kamera 19 beobachtet hingegen den Austrittsbereich der Vereinzelungsvorrichtung 18. Eine zweite Kollimationsoptik 21 beleuchtet dabei die aus dem Auslauf 16 ausgeworfenen Saatgutkörner von der einen Seite her, während die zweite Kamera 19 von der gegenüberliegenden Seite her die beschatteten Seiten der Saatgutkörner erfasst. Die zweite Kamera 19 arbeitet also im Durchlichtverfahren und erfasst die zeitliche Abfolge der austretenden Körner und zählt diese.

Die beiden Kameras 18 und 19 arbeiten dabei mit Belichtungszeiten im Bereich von 50 Millisekunden bis 2 Millisekunden, wobei die Belichtungszeiten vorteilhafterweise in Abhängigkeit der Drehzahl des Vereinzelungsrotors 14, des Saatguts, der Beleuchtungsintensität, Saatgut- und/oder Beleuchtungsfarbe und ggf. alternativen oder weiteren Betriebsparametern variabel gesteuert wird.

Die Ortsauflösung der Kameras 18 und 19 kann ebenfalls variabel gewählt werden, insbesondere in Abhängigkeit der Belichtungszeit, der verwendeten Kamera, des Kameraobjektivs und der Geometrie der Vereinzelungseinrichtung, wobei typischerweise eine Objektgröße von 8 mm bis 30 mm auf 128, 256 oder 512 Bildelemente abgebildet wird.

Wie Figur 3 zeigt, sind die beiden Kameras mit einer Steuereinrichtung 22 verbunden, die eine Bildvergleichseinrichtung 23 sowie eine Bildauswerteeinrichtung 24 umfasst, mittels derer kausale Zusammenhänge zwischen Einlauf- und Auswurfhäufungen von Saatgut anhand der von den beiden Kameras 18 und 19 gelieferten Bildern erkannt werden können. Die Bildauswertung erfolgt hierbei insbesondere statistisch hinsichtlich der zeitlichen Abfolge der Saatgutauswurfzeiten. Gegebenenfalls kann ein Histogramm der Auswurfpositionen erstellt werden, vorteilhafterweise etwa einmal pro Sekunde.

Werden kausale Zusammenhänge zwischen Einlauf- und Auswurfhäufungen erkannt, kann die Steuereinrichtung 22 in die Maschinensteuerung der Sämaschine 1 eingreifen und diverse Betriebsparameter der Sämaschine 1 verändern, so z. B. die Drehzahl des Vereinzelungsrotors 14, die Geschwindigkeit bzw. Dosiermenge der Dosiervorrichtung 4, die Justierparameter des Verteilerkopfes 8, die Ablagetiefe der Säschare 12 und ggf. weitere Parameter.

Wie Figur 2 zeigt, werden der Regelvorrichtung 22 diverse Betriebsparameter, genauer gesagt die durch entsprechende Erfassungsvorrichtungen bestimmte Ist-Werte dieser Betriebsparameter zugeführt. Mittels eines Gebläsesensors 25 wird die Drehzahl des Gebläses 6 erfasst und der Regelvorrichtung 22 zugeführt. Mittels eines Dosierradsensors 26 wird die Drehzahl des Rotors des Dosierers 4 erfasst und der Regelvorrichtung 22 zugeführt. Weiterhin wird mittels eines Fahrgeschwindigkeitssensors 27 die Fahrgeschwindigkeit der Sämaschine überwacht und der Regelvorrichtung 22 zugeführt. Mittels eines Vergleichmäßigungssensors 28 wird die Drehzahl des Rotors der Vereinzelungs- bzw. Vergleichmäßigungseinrichtung 13 erfasst.

Die Steuervorrichtung 22 enthält eine Regelvorrichtung 29, die im wesentlichen aus einem adaptiven Regler 30, vorzugsweise mit einem Fuzzy Logic-Baustein 31 besteht, der die besagten Eingangssignale aus der Bilderfassungsvorrichtung 17, dem Gebläsesensor 25, dem Dosierradsensor 26, dem Fahrgeschwindigkeitssensor 27 und dem Vergleichmäßigungssensor 28 in entsprechende Stellsignale umsetzt, um die besagten Komponenten in der gewünschten Weise einzustellen und zu betreiben und den gewünschten Saatgutaustrag an den Ausbringelementen 10 zu erreichen.

Der adaptive Regler 30 arbeitet dabei vorteilhafterweise mit einer Kalibriereinrichtung 32, die eine automatische Kalibrierung jeweils am Beginn eines Sävorgangs bei niedrigen Körnerzahlen und niedriger Fahrgeschwindigkeit durchführt. Die Ausbringmenge wird über die Bilderfassungsvorrichtung 17 online gemessen. Während der Kalibrierstrecke erfolgt sodann eine Ist-Wert-Annäherung auf den Soll-Wert der Ausbringmenge durch entsprechende Kalibrierung des Reglers 30. Als Grundeinstellung können hierbei voreingestellte Werte bzw. Werte aus einer Saatgutbibliothek übernommen werden.

In der vereinfachten Ausführungsform wird während des restlichen Sävorgangs bzw. der restlichen Arbeitszeit (wird) der Kalibriervorgang unterbrochen, wobei eine Offline-Messung der Ausbringmenge erfolgen kann. Gewünschte Zwischenkalibrierungen sind jedoch optional möglich.

## Patentansprüche

1. Sämaschine mit einem Saatgutspeicher (3), einer Ausbringvorrichtung (4, 5, 6, 7, 8, 10, 11, 13) zum Ausbringen von Saatgut aus dem Saatgutspeicher (3) sowie einer Regelvorrichtung (29) zur Regelung des von der Ausbringvorrichtung bewirkten Saatgutaustrags in Abhängigkeit zumindest einer vorgebbaren Eingabegröße, wobei die Regelvorrichtung (29) einen adaptiven Regler (30) zur adaptiven Bestimmung zumindest einer Stellgröße für die Ausbringvorrichtung aufweist, **dadurch gekennzeichnet, dass** die Ausbringvorrichtung eine mit dem Saatgutspeicher (3) verbindbare Dosiervorrichtung (4), einen der Dosiervorrichtung (4) nachgeschalteten Verteiler (9), eine Vielzahl von Ausbringelementen (10), die mit dem Verteiler (9) verbindbar sind, sowie eine zwischen dem Verteiler (9) und den Ausbringelementen (10) angeordnete Vereinzelungs- und/oder Vergleichmäßigungseinrichtung (13) aufweist, wobei eine Bilderfassungsvorrichtung (17) zur Erfassung des Saatgutaustrags vorgesehen ist, die eine erste Kamera (18), die den Einlauf der Vereinzelungs- und/oder Vergleichmäßigungsvorrichtung (13) beobachtet, und eine zweite Kamera (19), die den Austritt der Vereinzelungs- und/oder Vergleichmäßigungsvorrichtung (13) beobachtet, aufweist.

2. Sämaschine nach dem vorhergehenden Anspruch, wobei der Regler (30) einen Fuzzy Logic-Baustein (31) zur Bestimmung der zumindest einen Stellgröße mit Hilfe von Fuzzy Logic aufweist.

3. Sämaschine nach einem der vorhergehenden Ansprüche, wobei dem adaptiven Regler (30) als Eingabegröße zumindest ein Parameter aus der Gruppe umfassend Saatgutart, Pflanzendichte und Keimrate von einer Eingabevorrichtung zuführbar ist.

4. Sämaschine nach einem der vorhergehenden Ansprüche, wobei der adaptive Regler (30) in Abhängigkeit der eingegebenen Eingabegröße, Saatgutart und Pflanzendichte die Stellgröße für die Ausbringvorrichtung bestimmt.

5. Sämaschine nach Anspruch 2 oder einem der darauf rückbezogenen Ansprüche, wobei dem Fuzzy Logic-Baustein (31) der Ist-Wert einer Ausbringmenge zugeführt wird, aus dem der Fuzzy Logic-Baustein (31) mehrere Stellgrößen der Ausbringvorrichtung bestimmt.

6. Sämaschine nach Anspruch 2 oder einem der darauf rückbezogenen Ansprüche, wobei dem Fuzzy Logic-Baustein (31) die Ist-Werte mehrerer Betriebsparameter zuführbar sind, aus denen der Fuzzy Logic-Baustein (31) mehrere Stellgrößen für die Ausbringvorrichtung bestimmt.

7. Sämaschine nach dem vorhergehenden Anspruch, wobei die Betriebsparameter zumindest eine der folgenden Größen umfassen: Gebläsedrehzahl, Dosierraddrehzahl, Speicherfüllstand, Vereinzelungsgeschwindigkeit, Fahrgeschwindigkeit, Ausbringkörnerzahl, Ablagetiefe und Verteilerkopfjustierung.

8. Sämaschine nach einem der vorhergehenden Ansprüche, wobei die Stellgrößen zumindest eine der folgenden Größen umfassen: Gebläsedrehzahl, Dosierraddrehzahl, Speicherfüllstand, Vereinzelungsgeschwindigkeit, Fahrgeschwindigkeit, Ausbringkörnerzahl, Ablagetiefe und Verteilerkopfjustierung.

9. Sämaschine nach dem vorhergehenden Anspruch, wobei die Vereinzelungs- und/oder Vergleichmäßigungseinrichtung (13) unmittelbar an oder unmittelbar vor den Austragselementen (10) angeordnet ist.

10. Sämaschine nach einem der vorhergehenden Ansprüche, wobei eine Erfassungseinrichtung (17) zur Erfassung des von der Vereinzelungs- und/oder Vergleichmäßigungseinrichtung (13) ablaufenden Saatgutstroms vorgesehen ist und der Regler (30) Stellgrößen für die Ausbringvorrichtung in Abhängigkeit des erfassten Saatgutstroms bestimmt.

11. Sämaschine nach einem der vorhergehenden Ansprüche, wobei eine Kalibriereinrichtung (32) zur automatischen Kalibrierung des Reglers (30) vorgesehen ist, die bei einem Kalibriervorgang eine Online-Messung der Ausbringmenge vorsieht und den Regler (30) anhand eines Vergleichs des gemessenen IstWerts der Ausbringmenge und eines Soll-Wertes hierfür kalibriert.

12. Sämaschine nach dem vorhergehenden Anspruch, wobei die Kalibriereinrichtung (32) eine automatische Kalibrierung nur in einer Startphase eines Sävorgangs vorsieht.

13. Sämaschine nach einem der beiden vorhergehenden Ansprüche, wobei die Kalibriereinrichtung (32) eine automatische Kalibrierung nur in Betriebsphasen mit gegenüber dem Normalbetrieb verringerter Arbeitsgeschwindigkeit vorsieht.

14. Sämaschine nach einem der vorhergehenden Ansprüche, wobei die beiden Kameras (18, 19) der Bilderfassungsvorrichtung (17) mit der Regelvorrichtung (29) oder einer Steuereinrichtung (22) zur Steuerung zumindest eines Maschinenparameters in Abhängigkeit der von den beiden Kameras (18, 19) erfassten Bilder verbunden sind.

15. Sämaschine nach dem vorhergehenden Anspruch, wobei der zumindest eine Maschinenparameter eine Gebläsedrehzahl, eine Dosiervorrichtungsgeschwindigkeit, eine Vereinzelungsvorrichtungsgeschwindigkeit, eine Verteilerkopfjustierung, eine Schleppergeschwindigkeit, eine Ablagetiefe und/oder eine Körner-Quer- und Längsverteilung der Ausbringelemente (10) umfasst.

16. Sämaschine nach einem der beiden vorhergehenden Ansprüche, wobei eine Bildvergleichseinrichtung (23) zum Vergleichen der Bilder der ersten Kamera (18) mit den Bildern der zweiten Kamera (19) sowie eine Bildauswerteeinrichtung (24) zur Bestimmung von Zusammenhängen zwischen Einlaufhäufungen und Auslaufhäufungen in Abhängigkeit des Bildvergleichs vorgesehen ist.

17. Sämaschine nach dem vorhergehenden Anspruch, wobei die Bildauswerteeinrichtung (24) statistisch arbeitend ausgebildet ist und den Verlauf der Körnerzahl im Einlauf der Vereinzelungsvorrichtung (13) über der Zeit und den Verlauf der Körnerzahl im Austritt der Vereinzelungsvorrichtung (13) über der Zeit bestimmt und miteinander vergleicht.

18. Sämaschine nach dem vorhergehenden Anspruch, wobei der zumindest eine Maschinenparameter in Abhängigkeit des bestimmten Zusammenhangs zwischen Einlauf- und Auslaufhäufungen steuerbar ist.

19. Sämaschine nach einem der vorhergehenden Ansprüche, wobei die erste Kamera (18) von der zweiten Kamera (19) verschieden ausgebildet ist.

20. Sämaschine nach einem der vorhergehenden Ansprüche, wobei die erste Kamera (18) im Auflichtverfahren arbeitend ausgebildet ist.

21. Sämaschine nach einem der vorhergehenden Ansprüche, wobei die zweite Kamera (19) im Durchlichtverfahren arbeitend ausgebildet ist.

22. Verfahren zur Regelung des Saatgutaustrags einer Sämaschine, die mittels einer einstellbaren Ausbringvorrichtung den Saatgutaustrag bewirkt, wobei die Ausbringvorrichtung eine mit dem Saatgutspeicher (3) verbindbare Dosiervorrichtung (4), einen der Dosiervorrichtung (4) nachgeschalteten Verteiler (9), eine Vielzahl von Ausbringelementen (10), die mit dem Verteiler (9) verbindbar sind, sowie eine zwischen dem Verteiler (9) und den Ausbringelementen (10) angeordnete Vereinzelungs- und/oder Vergleichmäßigungseinrichtung (13) aufweist, wobei eine Bilderfassungsvorrichtung (17) zur Erfassung des Saatgutaustrags vorgesehen ist, die eine erste Kamera (18), die den Einlauf der Vereinzelungs- und/oder Vergleichmäßigungsvorrichtung (13) beobachtet, und eine zweite Kamera (19), die den Austritt der Vereinzelungs- und/oder Vergleichmäßigungsvorrichtung (13) beobachtet, aufweist, wobei die Regelung adaptiv durchgeführt wird und zumindest eine Stellgröße für die Ausbringvorrichtung mittels Fuzzy Logic in Abhängigkeit einer vorgebbaren Eingabegröße und in Abhängigkeit der von den beiden Kameras (18, 19) erfassten Bilder bestimmt wird.

## Claims

1. A seeder having a seed store (3), a discharge apparatus (4, 5, 6, 7, 8, 10, 11, 13) for discharging seed from the seed store (3), and a regulation apparatus (29) for regulating the seed discharge effected by the discharge apparatus in dependence on at least one predefinable input parameter, wherein the regulation apparatus (29) has an adaptive regulator (30) for an adaptive determination of at least one control variable for the discharge apparatus, **characterized in that** the discharge apparatus has a metering apparatus (4) connectable to the seed store (3), a distributor (9) connected downstream of the metering apparatus (4), a plurality of discharge elements (10) that are connectable to the distributor (9), and a separation and/or homogenization device (13) arranged between the distributor (9) and the discharge elements (10), with an image detection apparatus (17) being provided for detecting the seed delivery that has a first camera (18) that observes the infeed of the separation and/or homogenization apparatus (13) and that has a second camera (19) that observes the outlet of the separation and homogenization apparatus (13).

2. A seeder in accordance with the preceding claim, wherein the regulator (30) has a fuzzy logic module (31) for determining the at least one control variable with the aid of fuzzy logic.

3. A seeder in accordance with one of the preceding claims, wherein at least one parameter from the group comprising seed type, plant density, and germination rate is supplied to the adaptive regulator (30) as an input parameter from an input apparatus.

4. A seeder in accordance with one of the preceding claims, wherein the adaptive regulator (30) determines the control variable for the discharge apparatus in dependence on the input input parameter, the seed type and the plant density.

5. A seeder in accordance with claim 2 or with one of the claims dependent thereon, wherein the actual value of a discharge quantity is supplied to the fuzzy logic module (31) from which actual value the fuzzy logic module (31) determines a plurality of control variables of the discharge apparatus.

6. A seeder in accordance with claim 2 or with one of the claims dependent thereon, wherein the actual values of a plurality of operating parameters can be supplied to the fuzzy logic module (31) from which actual values the fuzzy logic module (31) determines a plurality of control variables for the discharge apparatus.

7. A seeder in accordance with the preceding claim, wherein the operating parameters comprise at least one of the following values: fan speed, metering wheel speed, store level, separation speed, travel speed, discharge grain number, placement depth, and distributor head adjustment.

8. A seeder in accordance with one of the preceding claims, wherein the control variables comprise at least one of the following values: fan speed, metering wheel speed, store level, separation speed, travel speed, discharge grain number, placement depth, and distributor head adjustment.

9. A seeder in accordance with the preceding claim, wherein the separation and/or homogenization device (13) is arranged directly at or directly before the discharge elements (10).

10. A seeder in accordance with one of the preceding claims, wherein a detection unit (17) is provided for detecting the seed flow running out of the separation and/or homogenization device (13) and the regulator (30) determines control variables for the discharge apparatus in dependence on the detected seed flow.

11. A seeder in accordance with one of the preceding claims, wherein a calibration device (32) for the automatic calibration of the regulator (30) is provided that provides an online measurement of the discharge quantity in a calibration procedure and that calibrates the regulator (30) using a comparison of the measured actual value of the discharge quantity and of a desired value.

12. A seeder in accordance with the preceding claim, wherein the calibration device (32) only provides an automatic calibration in a start phase of a sowing procedure.

13. A seeder in accordance with one of the two preceding claims, wherein the calibration device (32) only provides an automatic calibration in operating phases with a reduced work speed in relation to normal operation.

14. A seeder in accordance with one of the preceding claims, wherein the two cameras (18, 19) of the image detection apparatus (17) are connected to the regulation apparatus (29) or to a control device (22) for controlling at least one machine parameter in dependence on the images detected by the two cameras (18, 19).

15. A seeder in accordance with the preceding claim, wherein the at least one machine parameter comprises a fan speed, a metering apparatus speed, a separation apparatus speed, a distributor head adjustment, a tractor speed, a placement depth and/or a grain transverse and longitudinal distribution of the discharge elements (10).

16. A seeder in accordance with one of the two preceding claims, wherein an image comparison device (23) is provided for comparing the images of the first camera (18) with the images of the second camera (19) as well as an image evaluation device (24) for determining relationships between infeed clusters and outfeed clusters in dependence on the image comparison.

17. A seeder in accordance with the preceding claim, wherein the image evaluation device (24) is made to work statically and determines the course of the grain number in the infeed of the separation apparatus (13) over time and determines the course of the grain number in the outlet of the separation apparatus (13) over time and compares them with one another.

18. A seeder in accordance with the preceding claim, wherein the at least one machine parameter is controllable in dependence on the relationship determined between the infeed and outfeed clusters.

19. A seeder in accordance with one of the preceding claims, wherein the first camera (18) is configured differently from the second camera (19).

20. A seeder in accordance with one of the preceding claims, wherein the first camera (18) is configured to work in direct light mode.

21. A seeder in accordance with one of the preceding claims, wherein the second camera (19) is configured to work in transmitted light mode.

22. A method of regulating the seed delivery of a seeder that effects the seed delivery by means of a settable discharge apparatus, wherein the discharge apparatus has a metering apparatus (4) connectable to the seed store (3), a distributor (9) connected downstream of the metering apparatus (4), a plurality of discharge elements (10) that are connectable to the distributor (9), and a separation and/or homogenization apparatus (13) arranged between the distributor (9) and the discharge elements (10); wherein an image detection apparatus (17) is provided for detecting the seed delivery that has a first camera (18) that observes the infeed of the separation and/or homogenization apparatus (13) and that has a second camera (19) that observes the outlet of the separation and/or homogenization apparatus (13); and wherein the regulation is carried out adaptively and at least one control variable for the discharge apparatus is determined by means of fuzzy logic in dependence on a predefinable input value and in dependence on the images detected by the two cameras (18, 19).

## Revendications

1. Machine à semer comprenant un réservoir à semences (3), un dispositif d'épandage (4, 5, 6, 7, 8, 10, 11, 13) destiné à l'épandage de semences venant du réservoir à semences (3) ainsi qu'un dispositif de régulation (29) destiné à la régulation du débit de semences obtenu par le dispositif d'épandage en fonction d'au moins une variable d'entrée prédéfinissable,
le dispositif de régulation (29) comportant un régulateur adaptatif (30) destiné à déterminer de manière adaptative au moins une variable réglante pour le dispositif d'épandage, **caractérisée en ce que** le dispositif d'épandage comporte un dispositif de dosage (4) pouvant être relié au réservoir à semences (3), un répartiteur (9) placé en aval du dispositif de dosage (4), une pluralité d'éléments d'épandage (10), qui peuvent être reliés au répartiteur (9), ainsi qu'un dispositif de séparation et/ou d'homogénéisation (13) disposé entre le répartiteur (9) et les éléments d'épandage (10),
un dispositif d'acquisition d'images (17) étant prévu pour détecter le débit de semences, lequel dispositif d'acquisition d'images comporte une première caméra (18), qui observe l'entrée du dispositif de séparation et/ou d'homogénéisation (13), et une seconde caméra (19), qui observe la sortie du dispositif de séparation et/ou d'homogénéisation (13).

2. Machine à semer selon la revendication précédente, dans laquelle le régulateur (30) comporte un module de logique floue (31) destiné à déterminer l'au moins une variable réglante à l'aide d'une logique floue.

3. Machine à semer selon l'une des revendications précédentes, dans laquelle au moins un paramètre parmi le groupe constitué du type de semences, de la densité de plantation et du taux de germination peut être transmis comme variable d'entrée au régulateur adaptatif (30) par un dispositif d'entrée.

4. Machine à semer selon l'une des revendications précédentes, dans laquelle le régulateur adaptatif (30) détermine la variable réglante pour le dispositif d'épandage en fonction de la variable d'entrée saisie, du type de semences et de la densité de plantation.

5. Machine à semer selon la revendication 2 ou l'une des revendications se référant à celle-ci, dans laquelle
la valeur réelle d'une quantité d'épandage est transmise au module de logique floue (31), le module de logique floue (31) déterminant plusieurs variables réglantes du dispositif d'épandage à partir de cette valeur réelle.

6. Machine à semer selon la revendication 2 ou l'une des revendications se référant à celle-ci, dans laquelle
les valeurs réelles de plusieurs paramètres de fonctionnement peuvent être transmises au module de logique floue (31), le module de logique floue (31) déterminant plusieurs variables réglantes pour le dispositif d'épandage à partir de ces valeurs réelles.

7. Machine à semer selon la revendication précédente, dans laquelle
les paramètres de fonctionnement comprennent au moins une des variables suivantes :
vitesse de rotation de la souffleuse, vitesse de rotation de la roue de dosage, niveau de remplissage du réservoir, vitesse de séparation, vitesse de marche, nombre de graines épandues, profondeur de dépôt et réglage de la tête de répartiteur.

8. Machine à semer selon l'une des revendications précédentes, dans laquelle
les variables réglantes comprennent au moins une des variables suivantes :
vitesse de rotation de la souffleuse, vitesse de rotation de la roue de dosage, niveau de remplissage du réservoir, vitesse de séparation, vitesse de marche, nombre de graines épandues, profondeur de dépôt et réglage de la tête de répartiteur.

9. Machine à semer selon la revendication précédente, dans laquelle le dispositif de séparation et/ou d'homogénéisation (13) est disposé directement sur ou directement avant les éléments de décharge (10).

10. Machine à semer selon l'une des revendications précédentes, dans laquelle un dispositif de détection (17) est prévu pour détecter le flux de semences sortant du dispositif de séparation et/ou d'homogénéisation (13) et le régulateur (30) détermine des variables réglantes pour le dispositif d'épandage en fonction du flux de semences détecté.

11. Machine à semer selon l'une des revendications précédentes, dans laquelle un dispositif de calibrage (32) est prévu pour le calibrage automatique du régulateur (30), lequel dispositif de calibrage prévoit, lors d'un processus de calibrage, une mesure en ligne de la quantité d'épandage et calibre le régulateur (30) à l'aide d'une comparaison entre la valeur réelle mesurée de la quantité d'épandage et une valeur de consigne pour celle-ci.

12. Machine à semer selon la revendication précédente, dans laquelle le dispositif de calibrage (32) prévoit un calibrage automatique uniquement dans une phase de démarrage d'un processus de semis.

13. Machine à semer selon l'une des deux revendications précédentes, dans laquelle
le dispositif de calibrage (32) prévoit un calibrage automatique uniquement dans des phases de fonctionnement à vitesse de travail réduite par rapport au fonctionnement normal.

14. Machine à semer selon l'une des revendications précédentes, dans laquelle les deux caméras (18, 19) du dispositif d'acquisition d'images (17) sont reliées au dispositif de régulation (29) ou à un dispositif de commande (22) pour la commande d'au moins un paramètre de machine en fonction des images acquises par les deux caméras (18, 19).

15. Machine à semer selon la revendication précédente, dans laquelle
l'au moins un paramètre de machine comprend une vitesse de rotation de la souffleuse, une vitesse de dispositif de dosage, une vitesse de dispositif de séparation, un réglage de tête de répartiteur, une vitesse de tracteur, une profondeur de dépôt et/ou une répartition transversale et longitudinale des graines des éléments d'épandage (10).

16. Machine à semer selon l'une des deux revendications précédentes, dans laquelle
est prévu un dispositif de comparaison d'images (23) pour comparer les images de la première caméra (18) aux images de la seconde caméra (19) ainsi qu'un dispositif d'évaluation d'images (24) pour déterminer des relations entre des accumulations d'entrée et des accumulations de sortie en fonction de la comparaison d'images.

17. Machine à semer selon la revendication précédente, dans laquelle
le dispositif d'évaluation d'images (24) est réalisé à fonctionnement statistique et détermine la variation du nombre de graines à l'entrée du dispositif de séparation (13) en fonction du temps et la variation du nombre de graines à la sortie du dispositif de séparation (13) en fonction du temps et les compare.

18. Machine à semer selon la revendication précédente, dans laquelle l'au moins un paramètre de machine peut être commandé en fonction de la relation déterminée entre les accumulations d'entrée et de sortie.

19. Machine à semer selon l'une des revendications précédentes, dans laquelle la première caméra (18) est réalisée différente de la seconde caméra (19).

20. Machine à semer selon l'une des revendications précédentes, dans laquelle la première caméra (18) est réalisée fonctionnant selon un procédé à lumière incidente.

21. Machine à semer selon l'une des revendications précédentes, dans laquelle la seconde caméra (19) est réalisée fonctionnant selon un procédé à lumière transmise.

22. Procédé de régulation du débit de semences d'une machine à semer, qui effectue la décharge de semences au moyen d'un dispositif d'épandage réglable, dans lequel
le dispositif d'épandage comporte un dispositif de dosage (4) pouvant être relié au réservoir à semences (3), un répartiteur (9) placé en aval du dispositif de dosage (4), une pluralité d'éléments d'épandage (10), qui peuvent être reliés au répartiteur (9), ainsi qu'un dispositif de séparation et/ou d'homogénéisation (13) disposé entre le répartiteur (9) et les éléments d'épandage (10),
un dispositif d'acquisition d'images (17) étant prévu pour détecter le débit de semences, lequel dispositif d'acquisition d'images comporte une première caméra (18), qui observe l'entrée du dispositif de séparation et/ou d'homogénéisation (13), et une seconde caméra (19), qui observe la sortie du dispositif de séparation et/ou d'homogénéisation (13),
la régulation étant effectuée de manière adaptative et au moins une variable réglante pour le dispositif d'épandage étant déterminée au moyen d'une logique floue en fonction d'une variable d'entrée prédéfinissable et en fonction des images acquises par les deux caméras (18, 19).
